# EUROPEAN PATENT SPECIFICATION

(11) **EP 3 792 600 B1**
(45) Date of publication and mention of the grant of the patent: **19.02.2025**
(21) Application number: 19196866.8
(22) Date of filing: 12.09.2019
(51) Int. Cl.: G01D 5/20

(54) **SENSOR DEVICE FOR MEASURING THE ROTATIONAL POSITION OF AN ELEMENT**
SENSORVORRICHTUNG ZUR MESSUNG DER DREHPOSITION EINES ELEMENTS
DISPOSITIF DE CAPTEUR POUR MESURER LA POSITION ROTATIONNELLE D'UN ÉLÉMENT

(43) Date of publication of application: 17.03.2021
(73) Proprietor: TE Connectivity Belgium BVBA, 8020 Oostkamp (BE); TE Connectivity Germany GmbH, 64625 Bensheim (DE)
(72) Inventor: Ocket, Tom, 8820 Torhout (BE); Becker, Tobias, 68789 St. Leon-Rot (DE); Harz, Moritz, 67346 Speyer (DE)
(74) Representative: Grünecker Patent- und Rechtsanwälte PartG mbB

(56) References cited:
- EP-A1- 2 884 238
- US-A- 5 815 091
- US-A1- 2005 122 197

## Description

The invention relates to a sensor device for measuring the rotational position of an element that is rotatable about an axis of rotation.

Such sensor devices often comprise at least one sender member for emitting a magnetic field and at least two receiving members for receiving the magnetic field.

A disadvantage of the prior art sensor devices is that they are often imprecise.

In order to provide a solution that gives a higher precision each of the at least two receiving members can comprise two conductors that together delimit at least two surrounded areas, wherein each of the surrounded areas tapers in and against a circumferential direction at its ends. Such a configuration avoids artifacts and thus allows a more precise measurement.

US 2005/122197 A and EP 2 884 238 A show inductive rotation sensors with a sender member and one or more receiving members. US 5 0815 091 A discloses inductive position sensors with a sender member and at least one receiving member having a periodic shape.

The object of the invention is to provide a solution that compensates inhomogeneities in the magnetic field.

According to the invention, this is achieved, when at least one of the surrounded area is a non-convex surrounded area.

The solution according to the invention can further be improved by the following further developments and advantageous embodiments, which are independent of each other and can be combined arbitrarily, as desired.

The term delimit can here be understood as circumscribe, surround and/or substantially enclose. The conductors do not have to be entirely closed around the surrounded areas. They can have small gaps for example in a contact section in which the conductors can be contacted.

The surrounded areas can be planar or substantially planar to achieve a compact configuration. The surrounded areas can be arranged one behind the other in the circumferential direction. This can help to save space.

Each of the surrounded areas tapers in and against the circumferential direction. That means that each of the surrounded areas tapers in one direction and in the opposite direction and not just in one of the two directions. Each of the surrounded areas can expand in the middle. The middle can be the widest part, the width being measured in a radial direction pointing away from the axis. End sections of the surrounded areas at circumferential ends can have a wedge-shape, in particular with an angled or sharp tip.

The two conductors can form two loops delimiting or surrounding the surrounded areas.

The surrounded areas can each expand and contract in a circumferential direction about the axis of rotation.

The other surrounded areas can be convex areas each expanding and contracting in a circumferential direction about the axis of rotation. In an advantageous development, each of the two surrounded areas is eye-shaped. The surrounded areas can be generally oval and/or lentil-shaped.

In order to further improve the precision, the first and the last of the surrounded areas in the circumferential direction can expand and contract.

In order to further improve the precision, the first and the last of the surrounded areas in the circumferential direction can taper in and against a circumferential direction at their ends.

The circumferential direction can run around the axis.

Two neighboring surrounded areas can be separated from each other by a crossing of the two conductors. The two conductors can be partially located on different levels in order to avoid unwanted contacting. In particular in the area of the crossing, the two conductors can be arranged on two levels. The levels can for example be separated by insulating layers or the conductors can be arranged on a front and a back side of a PCB.

Each of the two conductors can have an elongated shape that is sinusoidal. Each of the two conductors can have an elongated shape that is spatially periodic, i.e. has a pattern that repeats itself in the circumferential direction. Such configurations can allow an easy processing of the data.

The conductor can have the shape of a path or a wire.

In an advantageous embodiment, the at least two receiving members have an identical shape and are shifted by a quarter of a period to each other along the circumferential direction. This can allow an easy determination of the angle. The quarter of the period is a mechanical spacing. It can in particular correspond to approximately half a length of a surrounded area. Electrically, the two receiving members can be shifted by Pi/2 or 90 degrees.

The two conductors can be substantially symmetrical or mirror symmetrical to each other with respect to a cylindrical circumferential surface.

In a further advantageous embodiment, the sections of the two conductors that enclose the surrounded areas comprise mainly or only curved sections. This can further improve the signal quality. In particular, no straight sections may be present in this area. Such straight sections can however be present in other parts of the conductors. For example, parts of the conductors that do not surround the surrounded areas and/or do not bound/limit the surrounded areas in particular in the radial direction but lead towards the surrounded areas and are used for contacting, e.g. end in a terminal or solder part, can comprise straight sections.

In a further advantageous embodiment, sections of the two conductors that enclose the surrounded areas comprise straight sections. This can make the production easier.

The two conductors can comprise no straight sections running in a radial direction. This can again avoid the occurrence of artifacts and thus improve the precision. The radial direction can be a direction pointing away from the axis of rotation. It can be perpendicular to the axis.

The sender member can comprise a coil in order to generate the magnetic field. In order to save space, the coil can be planar. In particular, the coil can be a spiral coil.

In a space-saving configuration, the sender member surrounds the receiving members.

Advantageously, at least on one side, preferably on both sides, a distance between the sender member and the receiving members along a circumferential direction is less than ¼ of the period. Preferably, this distance is less than 1/8 of the period. This can help to save space.

In a further advantageous development, at least on one side, preferably on both sides, a distance between the sender member and the receiving members along a circumferential direction is less than ¼ of the length of the sender member along the circumferential direction. Preferably, this distance is less than 1/8 of the length of the sender member along the circumferential direction.

Similarly, a distance between the sender member and the receiving members along a circumferential direction can be less than ¼ of the length of the receiving member along the circumferential direction. Preferably, this distance is less than 1/8 of the length of the receiving member along the circumferential direction.

The distance can moreover be less than ½ a length of the surrounded area along the circumferential direction.

To keep the sensor device compact, the sender member and/or at least one receiving member can lie substantially in a plane. Preferably, the members lie in the same plane. The plane can be perpendicular to the axis of rotation. Such a plane has to be understood as a substantially flat object where one dimension is much smaller than the other two dimensions. Parts of the sensor device can for example be located on a front side of a PCB and other parts can be located on a back side of the PCB. In such an embodiment the sensor device would still lie substantially in a plane.

In an easy-to-manufacture embodiment, the sender member and/or at least one receiving member can comprise a conductive path on a PCB. The conductive paths can comprise or be the conductors.

The magnetic field can be an alternating magnetic field. This can for example be achieved by applying an alternating current at the sender member.

The invention will now be described in greater detail and in an exemplary manner using advantageous embodiments and with reference to the drawings. The described embodiments are only possible configurations in which, however, the individual features as described above can be provided independently of one another or can be omitted.

The scope of the present invention is defined by claim 1.

In the figures,
Fig. 1 shows a schematic perspective view of a non-claimed embodiment of a transducer;
Fig. 2 shows a schematic perspective view of details of one receiving member of Fig. 1;
Fig. 3 shows a schematic perspective view of a non-claimed embodiment of a sensor device;
Fig. 4 shows a schematic perspective view of a rotatable element;
Fig. 5 shows a schematic perspective view of a further non-claimed embodiment of a sensor device;
Fig. 6 shows a schematic perspective view of a claimed embodiment of a sensor device.

Sensor devices 100 for measuring the rotational position of an element 110 that is rotatable about an axis of rotation 8 are shown. The rotatable element 110 can be a shaft 111, for example a shaft of a car engine.

Each sensor device 100 comprises an electromagnetic transducer 10, wherein each transducer 10 has at least one sender member 13 for emitting a magnetic field and at least two receiving members 14 for receiving the magnetic field. A metallic element is attached to the rotatable element 110 such that it rotates with the element 110. In this example, four flaps 115 are connected to the shaft 111 and protrude sideways away from the shaft 111 perpendicular to the axis 8.

The flaps 115 disturb the magnetic field generated by the sender member 13 so that the receiving members 14 receive different magnetic strengths of the magnetic field depending on the position of the flaps 115 and thus on the rotational position of the element 110. From the signals received by the receiving members 14, the rotational position of the element 110 can hence be deduced.

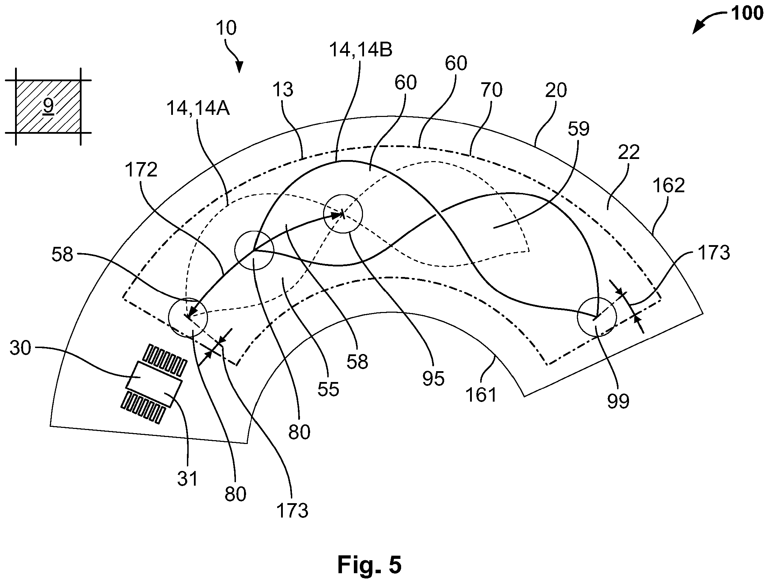

The sensor device 100 can comprise an arcuate carrier 20, see for example fig. 5. The sensor device 100 and in particular the arcuate carrier 20 has a substantially partially annular shape or C-shape. An inner edge 161 and an outer edge 162 of the arcuate carrier are arc-shaped.

In the depicted example, the sensor device 100 comprises one controller 30 which is embodied as an integrated circuit 31. The controller 30 is used for controlling the transducer 10. The data of the controller 30 can then be processed in a further, non-depicted module. The controller 30 is arranged on the arcuate carrier 20.

The sender member 13 comprises conductive paths 60 that form a coil 70, in particular a spiral coil 71 on the arcuate carrier 20, which is embodied as a PCB 22. When running a current through the sender member 13, a magnetic field results which is then disturbed by the flaps 115 and received by the receiving members 14. Depending on whether the current runs in one direction or the other, for example clockwise or counterclockwise in the sender member 13, the magnetic field is directed in one direction or the other.

Advantageously, the magnetic field that is generated is an alternating magnetic field. This magnetic field can be generated by applying an alternating current at the sender member 13.

Each of the receiving members 14 comprises two conductors 90 embodied as conductive paths 60 on the PCB 22. The conductive paths 60 resemble graphs of a periodic function, in particular a sine function. The conductors 90 thus have an elongated shape that is sinusoidal. The first conductor 90, 91 starts at a contact section 80 and runs over one period of the periodic function along a circumferential direction C. At a junction 99, it is connected to the second connector 90, 92 which runs against the circumferential direction over one period back to the contact section 80.

Each of the receiving members 14 and in particular the conductors 90, 91, 92 enclose or surround two surrounded areas 50 and resemble two eyes.

In the transducer 10, the two receiving members 14 are shifted by a quarter of a period 171 of the periodic function.

In order to avoid a crossing of the conductive paths 60, parts of the conductive paths 60 can be arranged on different levels which are for example separated by insulating layers or which can be arranged on a front side and a back side of the PCB 22.

In the transducer 10, the sender member 13 surrounds the receiving members 14 to save space.

The sender member 13 and the receiving members 14 are basically flat or planar and lie in the plane 9 that is perpendicular to the axis 8. The entire sensor device 100 is basically a flat element arranged in this plane 9.

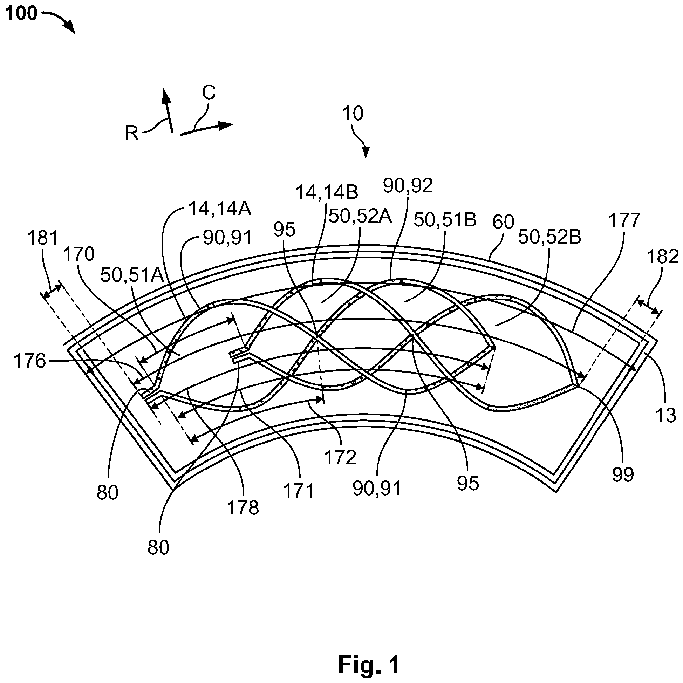

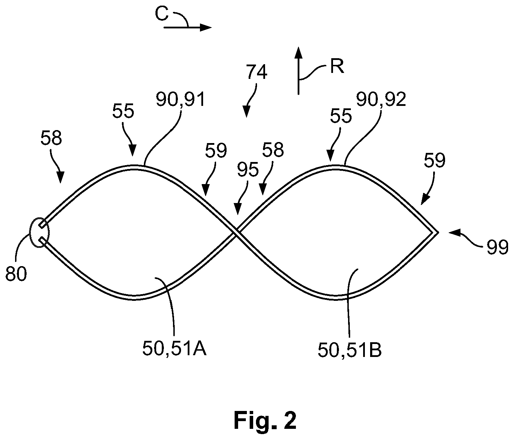

In Fig. 1, the details of a transducer 10 are shown. In Fig. 2, a receiving member 14 is depicted in detail.

Each of the two receiving members 14, 14A, 14B comprises two conductors 90, 91, 92 that together delimit two surrounded areas 50, the surrounded areas 50 each expanding and contracting in a circumferential direction C about the axis of rotation 8. The combination of the two conductors 90, 91, 92 is not entirely closed. In particular around the first surrounded areas 50, 51A, 52A the conductors are slightly spaced apart at the contact section 80 at which contact to the conductors 90 is made. The conductors 90 circumscribe or surround or substantially enclose the surrounded areas 50.

The surrounded areas 50 are basically planar. They lie one behind the other in the circumferential direction C. The two neighbouring surrounded areas 50 are separated from each other by a crossing 95 of the conductors 90. In this area of crossing, the two conductors 90 can be located at different levels to avoid a current flow. For example, they can be located on a front side and a back side of the PCB 22.

Each of the surrounded areas 50 tapers in and against the circumferential direction C at their ends. The surrounded area 50 is widest at a middle section 55, the width being measured in a radial direction R that points away from the axis 8 and is perpendicular to the axis 8. The radial direction R is further perpendicular to the circumferential direction C. At end sections 58 and 59, the surrounded areas 50 are wedge-like with sharp tips. Each of the surrounded areas 15 is thus eye-shaped or lentil-shaped.

Each of the two conductors 90, 91, 92 has an elongated shape that resembles a graph of a spatially periodic function, in particular a sine function.

The two receiving members 14 have an identical shape and are shifted by a quarter of a period 171 to each other along the circumferential direction C. Such a mechanical shifting relates to an electrical shifting of Pi/2 and is approximately half a length 172 of a surrounded area 50.

The two conductors 90 are substantially symmetrical to each other with respect to a reflection at a cylindrical circumferential surface.

The sections of the two conductors 90 that enclose the surrounded areas 50 comprise mainly or only curved sections in order to improve the signal quality. No straight sections are present in these sections. Moreover, the two conductors 90 comprise no straight sections that run in the radial direction R. Although in the area of the contact sections 80, straight sections are present, these sections do not run in the radial direction R.

The sender member 13 surrounds the receiving members 14.

Each distance 181, 182 between the sender member 13 and the receiving members 14 along the circumferential direction C is less than a quarter of the period 171 and less than one quarter of the length 177 of the sender member 13 along the circumferential direction C and further less than one quarter of the length 178 of the receiving member 14 along the circumferential direction 14.

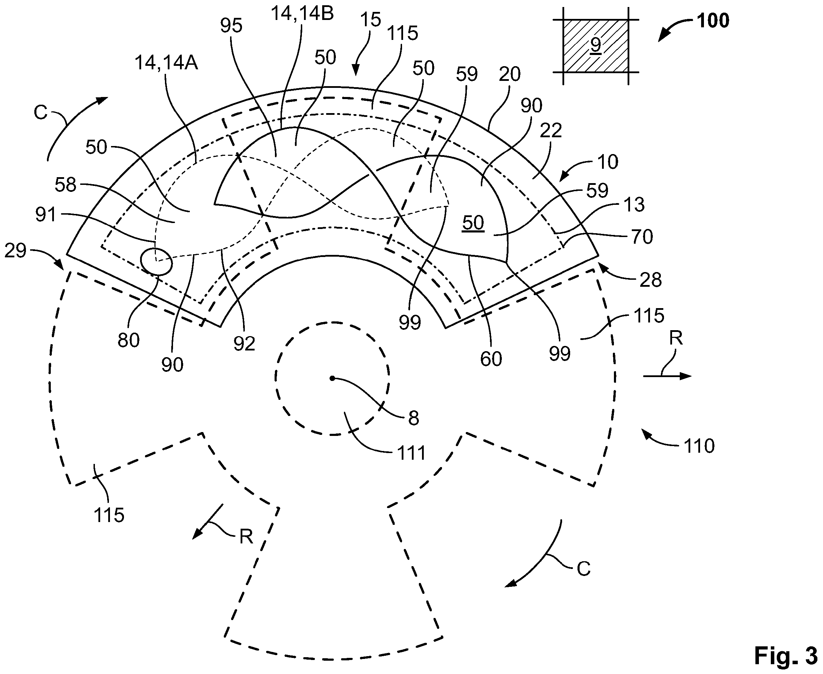

In Fig. 3, a further embodiment of a sensor device 100 is shown. The transducer 10 again comprises a sender member 13 and two receiving members 14. In each of the two receiving members 14, the conductors 90 surround two convex surrounded areas 50. At each of their ends in and against the circumferential direction C the surrounded areas 50 taper. The surrounding areas 50 thus have an eye-shape.

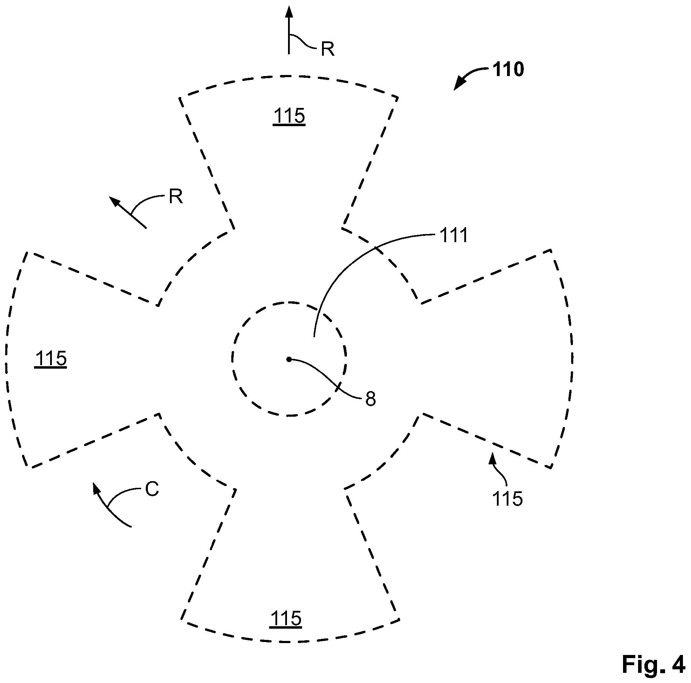

In Fig. 4, the rotatable element 110 is shown. Four flaps 115 are arranged behind each other in the circumferential direction C and each protrudes along the radial direction R. The number of flaps can be different in different embodiments. For example, three flaps 115 or five flaps 15 could be present.

In Fig. 5, a further embodiment of a sensor device 100 is shown. Similar to the one shown in fig. 3, a transducer 10 is present. Further, this embodiment comprises a controller 30 in the form of an integrated circuit 31 that is located on a PCB 22.

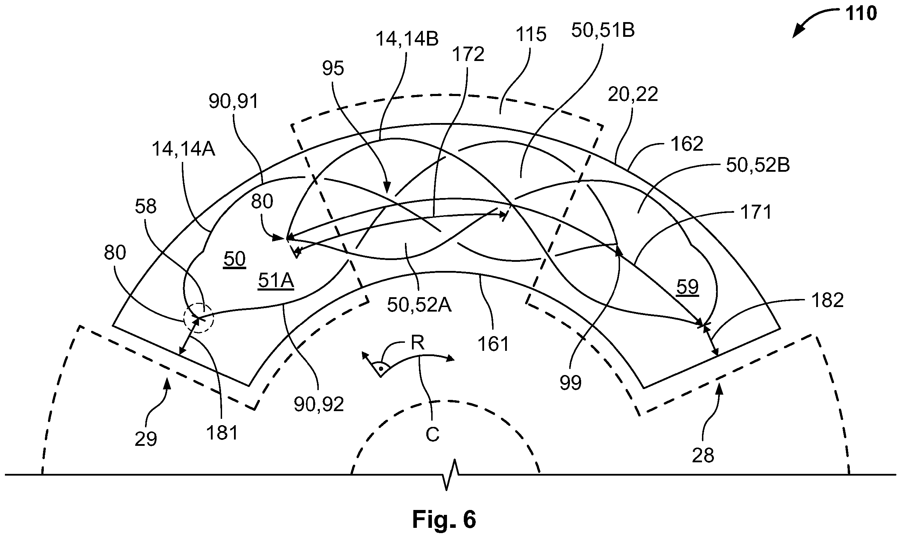

The embodiment shown in Fig. 6 differs from the previous embodiments in that two of the surrounding areas 50, namely the one at the ends 28, 29 are not convex. Rather, in each case one of the conductors 90, 91, 92 defines a small indent.. The reason for such slightly modified geometry is because at the ends of the transducer 10 the magnetic field is not perfectly homogeneous as in the rest of the transducer 10. To compensate this, the ends of the taper can be optimized to achieve a better signal quality (closer to the sine shape). This indent shown here is only as example. Preferably, the curved section should be smoother.

### REFERENCE NUMERALS

- 8: axis of rotation
- 9: plane
- 10: transducer
- 13: sender member
- 14: receiving member
- 14A: first receiving member
- 14B: second receiving member
- 15: central part
- 20: arcuate carrier
- 22: PCB
- 30: controller
- 31: integrated circuit
- 50: surrounded area
- 51A: first surrounded area
- 51B: second surrounded area
- 52A: first surrounded area
- 52B: second surrounded area
- 55: middle section
- 57: straight section
- 58: end section
- 59: end section
- 60: conductive path
- 70: coil
- 71: spiral coil
- 80: contact section
- 90: conductor
- 91: first conductor
- 92: second conductor
- 95: crossing
- 99: junction
- 100: sensor device
- 110: element
- 111: shaft
- 115: flap
- 161: inner edge
- 162: outer edge
- 170: distance
- 171: period
- 172: length of surrounded area
- 173: distance
- 176: length
- 177: length
- 178: length
- 181: distance
- 182: distance

- C: circumferential direction
- R: radial direction

## Claims

1. Sensor device (100) for measuring the rotational position of an element (110) that is rotatable about an axis of rotation (8), the sensor device (100) comprising at least one sender member (13) for emitting a magnetic field and at least two receiving members (14) for receiving the magnetic field, wherein each of the at least two receiving members (14) comprises two conductors (90) that together delimit at least two surrounded areas (50), wherein each of the surrounded areas (50) tapers in and against a circumferential direction (C) at their ends, **characterized in that** at least one of the surrounded areas (50) is a non-convex surrounded area.

2. Sensor device (100) according to claim 1, wherein the non-convex surrounded area has an indent at its end.

3. Sensor device (100) according to one of claims 1 or 2, wherein at least one of the other surrounded areas (50) is a convex area that expands and contracts in the circumferential direction (C) about the axis of rotation (8).

4. Sensor device (100) according to one of claims 1 to 3, wherein each of the at least two surrounded areas (50) is eye-shaped.

5. Sensor device (100) according to one of claims 1 to 4, wherein the at least two receiving members (14) have an identical shape and are shifted by a quarter of a period (171) to each other along the circumferential direction (C).

6. Sensor device (100) according to one of claims 1 to 5, wherein the sections of the two conductors (90) that enclose the surrounded areas (50) comprise mainly curved sections.

7. Sensor device (100) according to one of claims 1 to 6, wherein the two conductors (90) comprise no straight sections running in a radial direction (R).

8. Sensor device (100) according to one of claims 1 to 7, wherein the sender member (13) comprises a coil (70).

9. Sensor device (100) according to one of claims 1 to 8, wherein the sender member (13) surrounds the receiving members (14).

10. Sensor device (100) according to one of claims 1 to 9, wherein a distance (181, 182) between the sender member (13) and the receiving members (14) along the circumferential direction (C) is less than ¼ of the length (177) of the sender member (13) along the circumferential direction (C).

11. Sensor device (100) according to one of claims 1 to 10, wherein the sender member (13) and/or at least one receiving member (14) substantially lie in a plane (9).

12. Sensor device (100) according to one of claims 1 to 11, wherein the sender member (13) and/or at least one receiving member (14) comprises a conductive path (16) on a PCB (22).

## Patentansprüche

1. Sensorvorrichtung (100) zum Messen der Rotationsposition eines Elements (110), das um eine Rotationsachse (8) drehbar ist, wobei die Sensorvorrichtung (100) mindestens ein Senderelement (13) zum Aussenden eines Magnetfelds und mindestens zwei Empfangselemente (14) zum Empfangen des Magnetfelds umfasst, wobei jedes der mindestens zwei Empfangselemente (14) zwei Leiter (90) umfasst, die zusammen mindestens zwei umschlossene Bereiche (50) begrenzen, wobei jeder der umschlossenen Bereiche (50) an ihren Enden in und entgegen einer Umfangsrichtung (C) spitz zuläuft, **dadurch gekennzeichnet, dass** mindestens einer der umschlossenen Bereiche (50) ein nicht konvexer umschlossener Bereich ist.

2. Sensorvorrichtung (100) nach Anspruch 1, wobei der nicht konvexe umschlossene Bereich an seinem Ende eine Einbuchtung aufweist.

3. Sensorvorrichtung (100) nach einem der Ansprüche 1 oder 2, wobei mindestens einer der anderen umschlossenen Bereiche (50) ein konvexer Bereich ist, der sich in Umfangsrichtung (C) um die Drehachse (8) ausdehnt und zusammenzieht.

4. Sensorvorrichtung (100) nach einem der Ansprüche 1 bis 3, wobei jeder der mindestens zwei umschlossenen Bereiche (50) augenförmig ist.

5. Sensorvorrichtung (100) nach einem der Ansprüche 1 bis 4, wobei die mindestens zwei Empfangselemente (14) eine identische Form aufweisen und um eine Viertelperiode (171) entlang der Umfangsrichtung (C) zueinander versetzt sind.

6. Sensorvorrichtung (100) nach einem der Ansprüche 1 bis 5, wobei die Abschnitte der beiden Leiter (90), die die umschlossenen Bereiche (50) einschließen, hauptsächlich gekrümmte Abschnitte umfassen.

7. Sensorvorrichtung (100) nach einem der Ansprüche 1 bis 6, wobei die beiden Leiter (90) keine geraden Abschnitte umfassen, die in einer radialen Richtung (R) verlaufen.

8. Sensorvorrichtung (100) nach einem der Ansprüche 1 bis 7, wobei das Senderelement (13) eine Spule (70) umfasst.

9. Sensorvorrichtung (100) nach einem der Ansprüche 1 bis 8, wobei das Senderelement (13) die Empfangselemente (14) umgibt.

10. Sensorvorrichtung (100) nach einem der Ansprüche 1 bis 9, wobei ein Abstand (181, 182) zwischen dem Senderelement (13) und den Empfangselementen (14) entlang der Umfangsrichtung (C) weniger als ein Viertel der Länge (177) des Senderelements (13) entlang der Umfangsrichtung (C) beträgt.

11. Sensorvorrichtung (100) gemäß einem der Ansprüche 1 bis 10, wobei das Senderelement (13) und/oder mindestens ein Empfangselement (14) im Wesentlichen in einer Ebene (9) liegen.

12. Sensorvorrichtung (100) nach einem der Ansprüche 1 bis 11, wobei das Senderelement (13) und/oder mindestens ein Empfangselement (14) einen leitenden Pfad (16) auf einer Leiterplatte (22) umfasst.

## Revendications

1. Dispositif capteur (100) pour mesurer la position de rotation d'un élément (110) qui peut tourner autour d'un axe de rotation (8), le dispositif capteur (100) comprenant au moins un élément émetteur (13) pour émettre un champ magnétique et au moins deux éléments récepteurs (14) pour recevoir le champ magnétique, dans lequel chacun desdits au moins deux éléments récepteurs (14) comprend deux conducteurs (90) qui délimitent ensemble au moins deux zones entourées (50), dans lequel chacune des zones entourées (50) se rétrécit selon une direction circonférentielle (C) et à l'inverse de celle-ci à ses extrémités, **caractérisé en ce qu'**au moins l'une des zones entourées (50) est une zone entourée non convexe.

2. Dispositif capteur (100) selon la revendication 1, dans lequel la zone entourée non convexe comporte une indentation à son extrémité.

3. Dispositif capteur (100) selon l'une des revendications 1 et 2, dans lequel au moins l'une des autres zones entourées (50) est une zone convexe qui s'étend et se contracte selon la direction circonférentielle (C) autour de l'axe de rotation (8).

4. Dispositif capteur (100) selon l'une des revendications 1 à 3, dans lequel chacune desdites au moins deux zones entourées (50) présente une forme d'œil.

5. Dispositif capteur (100) selon l'une des revendications 1 à 4, dans lequel lesdits au moins deux éléments récepteurs (14) ont une forme identique et sont décalés d'un quart de période (171) l'un par rapport à l'autre selon la direction circonférentielle (C).

6. Dispositif capteur (100) selon l'une des revendications 1 à 5, dans lequel les sections des deux conducteurs (90) qui enferment les zones entourées (50) comprennent principalement des sections courbes.

7. Dispositif capteur (100) selon l'une des revendications 1 à 6, dans lequel les deux conducteurs (90) ne comportent aucune section droite s'étendant selon une direction radiale (R).

8. Dispositif capteur (100) selon l'une des revendications 1 à 7, dans lequel l'élément émetteur (13) comprend une bobine (70).

9. Dispositif capteur (100) selon l'une des revendications 1 à 8, dans lequel l'élément émetteur (13) entoure les éléments récepteurs (14).

10. Dispositif capteur (100) selon l'une des revendications 1 à 9, dans lequel la distance (181, 182) entre l'élément émetteur (13) et les éléments récepteurs (14) selon la direction circonférentielle (C) est inférieure à ¼ de la longueur (177) de l'élément émetteur (13) selon la direction circonférentielle (C).

11. Dispositif capteur (100) selon l'une des revendications 1 à 10, dans lequel l'élément émetteur (13) et/ou au moins un élément récepteur (14) se trouvent substantiellement dans un même plan (9).

12. Dispositif capteur (100) selon l'une des revendications 1 à 11, dans lequel l'élément émetteur (13) et/ou au moins un élément récepteur (14) comprennent un chemin conducteur (16) sur un circuit imprimé (22).
